# EUROPEAN PATENT APPLICATION

(11) **EP 4 769 862 A1**
(43) Date of publication of application: **01.07.2026**
(21) Application number: 25226399.1
(22) Date of filing: 22.12.2025
(51) Int. Cl.: H02J 3/06, H02J 3/32, H02J 3/38, H02J 3/48

(54) **INTER-LINKING CONVERTER FOR MUTUAL COOPERATIVE OPERATION BETWEEN MICROGRIDS AND CONTROL METHOD THEREOF**

(30) Priority: 26.12.2024 KR 20240196963
(71) Applicant: Korea Institute of Energy Research, Daejeon 34129 (KR)
(72) Inventor: JEUNG, Yoon Cheul, 63357 Jeju-si, Jeju-do (KR); KIM, Gi Hoon, 63156 Jeju-si, Jeju-do (KR); KANG, Gil Hyeon, 63097 Jeju-si, Jeju-do (KR); KO, Hee Sang, 63283 Jeju-si, Jeju-do (KR); KANG, Kyoung Soo, 34120 Daejeon (KR); JWA, Eun Jin, 63336 Jeju-si, Jeju-do (KR); JEONG, Nam Jo, 63101 Jeju-si, Jeju-do (KR); HAN, Ji Hyung, 63303 Jeju-si, Jeju-do (KR); HWANG, Kyo Sik, 63326 Jeju-si, Jeju-do (KR); JUNG, Kwang Jin, 34116 Daejeon (KR)
(74) Representative: patcare Patentanwälte Partnerschaft mbB

(57) **Abstract**

An inter-linking converter includes: a status information acquisition unit which acquires microgrid status information including the status of distributed resources in each of a plurality of microgrids; a reserve power calculation unit which calculates the supply reserve power or demand reserve power of each microgrid based on information on the status of the distributed resources; and a converter control unit which controls a power stage of the inter-linking converter based on the calculated supply reserve power or demand reserve power of each microgrid, so that power is transmitted and received between the microgrids.

## Description

### CROSS REFERENCE TO RELATED APPLICATION

This application claims the benefit of and priority to Korea Patent Application No. 10-2024-0196963, filed on December 26, 2024, the entire contents of which are hereby incorporated herein by reference.

### FIELD OF TECHNOLOGY

The present disclosure relates to an inter-linking converter that sends and receives power between microgrids.

### BACKGROUND

A traditional power system includes centralized large-scale power plants and a single operator that manages them. This structure has long been considered suitable for handling large-scale electricity supply in a stable and efficient manner. However, due to the rapid changes in the electricity market and the fast spread of renewable energy, the traditional centralized systems are increasingly revealing their structural limitations. Power systems centered on large-scale plants are failing to effectively meet the growing demand for energy self-sufficiency arising at the local level, in line with the expansion of renewable energy. As a result, concerns are being raised about the flexibility and efficiency of power systems.

In particular, renewable energy sources such as solar and wind power exhibit significant fluctuations in the amount of power generation depending on weather conditions, and it is difficult to accurately predict the amount of power generation by time of day. This variability poses a major challenge to the existing power systems. The current systems have limited flexibility to absorb such fluctuations and rely heavily on the capacity and operational efficiency of energy storage systems (ESS) to maintain a stable power supply. However, ESS-centered solutions involve enormous initial investments and operational costs, which ultimately undermine the overall economic viability of the power systems. Therefore, new alternatives are needed that can effectively manage the variability of renewable energy while ensuring economic feasibility.

Against this backdrop, the paradigm of power systems is now shifting from traditional power grids based on centralized large-scale power plants to local-level microgrids. Microgrids are gaining attention as a system that can independently and efficiently manage distributed energy resources in each region, as renewable energy sources increase and uncertainty in power supply and demand grows. A microgrid is structured to produce and consume electricity within a specific region and to exchange electric power with external systems when necessary. These systems offer flexibility by operating independently or integrating multiple microgrids to function like a virtual power plant (VPP).

However, in many cases, power exchange between microgrids is still carried out manually or relies on conventional simplistic control technologies. This has created issues that have been frequently reported, such as reduced energy self-sufficiency between the inside and outside of microgrids and increased energy waste. In particular, when a microgrid operates independently, its system - comprising small-scale generators and controllable loads - has lower inertia compared to traditional large-scale generators. This makes it more susceptible to frequency fluctuations and power stability issues. Such limitations can hinder effective responses to the variability of renewable energy sources.

### SUMMARY

Against this background, in one aspect, the present disclosure is directed to providing a technology that automates interactions between microgrids. In another aspect, the present disclosure is directed to providing a control technology that enables power exchange and stable cooperative operation between microgrids. In yet another aspect, the present disclosure is directed to providing a technology that effectively controls the variability of renewable energy resources while maintaining a stable power supply to loads associated with each microgrid.

An embodiment of the present disclosure provides an inter-linking converter including: a status information acquisition unit which acquires microgrid status information including the status of distributed resources in each of a plurality of microgrids; a reserve power calculation unit which calculates the supply reserve power or demand reserve power of each microgrid based on information on the status of the distributed resources; and a converter control unit which controls a power stage of the inter-linking converter based on the calculated supply reserve power or demand reserve power of each microgrid, so that power is transmitted and received between the microgrids.

The reserve power calculation unit may determine a mode based on the supply reserve power or demand reserve power of each microgrid, and the converter control unit may determine the direction of power transmission and reception between the microgrids according to the determined mode.

The converter control unit may limit the transmission power between the microgrids based on the supply reserve power or the demand reserve power.

The reserve power calculation unit may activate a first mode when the supply reserve power of a first microgrid is less than a first minimum supply reserve power, and, in the first mode, the converter control unit may calculate a first required supply power by applying the difference between a measured frequency and a reference frequency of the first microgrid to a droop curve of the first microgrid.

The converter control unit may apply the calculated first required supply power to a first limiter whose upper limit is determined as the supply reserve power of a second microgrid, thereby calculating a first supply power command value from the second microgrid to the first microgrid.

The reserve power calculation unit may activate a second mode when the demand reserve power of the first microgrid is less than a first minimum demand reserve power, and, in the second mode, the converter control unit may calculate a first required demand power by applying the difference between a measured frequency and a reference frequency of the first microgrid to a droop curve of the first microgrid.

The converter control unit may apply the calculated first required demand power to a second limiter whose lower limit is determined as the demand reserve power of the second microgrid, thereby calculating a second supply power command value from the first microgrid to the second microgrid.

The reserve power calculation unit may activate a third mode when the supply reserve power of the second microgrid is less than second minimum supply reserve power, and, in the third mode, the converter control unit may calculate second required supply power by applying the difference between a measured frequency and a reference frequency of the second microgrid to a droop curve of the second microgrid, and, when both the second mode and the third mode are activated, may apply both the first required demand power and the second required supply power to calculate a supply power command value between the first microgrid and the second microgrid.

The reserve power calculation unit may calculate the supply reserve power of a distributed resource that manages the state of charge (SoC), based on the difference between a current SoC and a minimum SoC.

The reserve power calculation unit may determine that the distributed resource has supply reserve power when the current SoC is greater than the minimum SoC, and may determine the rated capacity of a power conditioning system (PCS) associated with the resource as the supply reserve power of the resource.

The reserve power calculation unit may calculate the supply reserve power of the resource by multiplying the difference between the current SoC and the minimum SoC by a certain coefficient and multiplying the result by the rated capacity of a power conditioning system (PCS) associated with the resource.

The reserve power calculation unit may calculate the demand reserve power of a distributed resource that manages the state of charge (SoC), based on the difference between the current SoC and the maximum SoC.

The reserve power calculation unit may calculate the supply reserve power of a renewable energy resource, among the distributed resources, as curtailed power.

Another embodiment of the present disclosure provides a control method of an inter-linking converter, the control method including: acquiring microgrid status information including the status of distributed resources in each of a plurality of microgrids; comparing a measured frequency of one microgrid with a reference frequency thereof; controlling the frequency of the one microgrid using the distributed resources within the one microgrid if the measured frequency is lower than the reference frequency; and controlling a power stage of the inter-linking converter to supply power from another microgrid to the one microgrid if the supply reserve power of the one microgrid is insufficient.

The control method may further include: controlling the frequency of the one microgrid using the distributed energy resources within the microgrid if the measured frequency is higher than the reference frequency; and controlling the power stage of the inter-linking converter to supply power from the one microgrid to another microgrid if the demand reserve power of the one microgrid is insufficient.

As described above, according to the present disclosure, it is possible to enhance the energy self-sufficiency of distributed power systems, minimize energy waste, and maximize operational efficiency. Furthermore, the present disclosure enables effective control of the variability of renewable energy resources and maintains a stable power supply to loads associated with each microgrid.

### BRIEF DESCRIPTION OF THE DRAWINGS

FIG. 1 is a diagram illustrating a configuration of a power system according to one embodiment.
FIG. 2 is a diagram illustrating a configuration of an inter-linking converter according to one embodiment.
FIG. 3 is a diagram illustrating a configuration of a controller according to one embodiment.
FIGS. 4A to 4C are diagrams illustrating examples in which a reserve power calculation unit calculates supply reserve power based on a current SoC, according to one embodiment.
FIGS. 5A to 5C are diagrams illustrating examples in which the reserve power calculation unit calculates demand reserve power based on a current SoC, according to one embodiment.
FIG. 6 is a diagram illustrating a first example configuration of a converter control unit according to one embodiment.
FIGS. 7A and 7B illustrate examples of droop curves according to one embodiment.
FIG. 8 is a diagram illustrating a second example configuration of the converter control unit according to one embodiment.
FIG. 9 is a flowchart illustrating a method in which the inter-linking converter controls a first microgrid according to one embodiment.
FIG. 10 is a flowchart illustrating a method in which the inter-linking converter controls a second microgrid according to one embodiment.
FIGS. 11A, 11B, and 12 illustrate experimental waveforms of a first mode according to one embodiment.
FIGS. 13A, 13B, and 14 illustrate experimental waveforms of a second mode according to one embodiment.
FIGS. 15A, 15B, and 16 illustrate experimental waveforms of a third mode according to one embodiment.
FIGS. 17A, 17B, and 18 illustrate experimental waveforms of a fourth mode according to one embodiment.

### DETAILED DESCRIPTION

Hereinafter, certain embodiments of the present disclosure will be described in detail with reference to exemplary drawings. It should be noted that, in assigning reference numerals to components in the drawings, the same components are given the same numerals as much as possible, even if they are shown in different drawings. Furthermore, in describing the present disclosure, detailed explanations of well-known components or functions may be omitted if they are deemed to obscure the gist of the disclosure.

In describing the components of the present disclosure, terms such as first, second, A, B, (a), (b), and the like may be used. These terms are merely intended to distinguish one component from another, and the essence, sequence, or order of the components is not limited by the terms. Furthermore, when a component is described as being "connected", "coupled", or "attached" to another component, it should be understood that the component may be directly connected or attached to another component or that the component may also be "connected", "coupled", or "attached" to another component via yet another component provided therebetween.

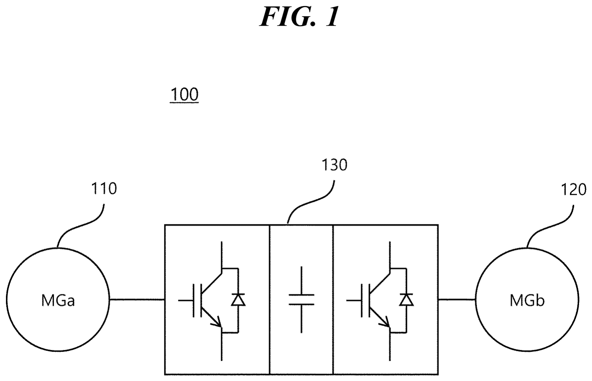

FIG. 1 is a diagram illustrating a configuration of a power system according to one embodiment.

Referring to FIG. 1, the power system 100 may include a plurality of microgrids 110 and 120. An inter-linking converter 130 may be placed between the plurality of microgrids 110 and 120.

Each of the microgrids 110 and 120 may be an independent power network capable of producing, distributing, and consuming electricity within a specific region. The microgrids 110 and 120 may include distributed power generation facilities based on renewable energy sources such as solar power, wind power, and fuel cells. They may also include an energy storage system (ESS) and an energy management system (EMS) that controls the supply and consumption of electricity.

The components within the microgrids 110 and 120 may be designed to balance power demand and supply at the local level. For example, distributed power generation sources such as solar panels may experience fluctuations in the amount of power generation depending on solar irradiance, and the ESS may perform charging and discharging to compensate for this variability. Additionally, the EMS may collect and analyze power consumption data in real time to implement optimal energy distribution strategies.

The microgrids 110 and 120 may operate as independent power grids, but they can also be connected to an external power grid when necessary. Such connections to an external power grid may be established to receive electricity from an external source in case of a power shortage or to transmit excess produced power to the outside. These connections can be made through the inter-linking converter 130.

The microgrids 110 and 120 may have different forms of power supply and different capacities depending on their components, which can vary based on the characteristics and energy demand of the region where each microgrid 110 and 120 is deployed. For example, a microgrid 110 installed in an industrial complex may include high-output generation facilities and an ESS to handle large-scale power demands, while a microgrid 120 installed in a residential area may have relatively small-scale generation facilities and an energy management system.

The inter-linking converter 130 may detect frequency variations occurring in each microgrid 110 and 120. This device may perform a power transfer function to respond to such frequency variations. For example, if deviation occurs in a specific microgrid 110 or 120, the inter-linking converter 130 may supply or absorb the necessary power to compensate for the variations. Through this, the frequency of the microgrid 110 or 120 can be stabilized.

The inter-linking converter 130 may include a limiter to keep the amount of power exchange within a set range. The limiter may perform a control function to prevent excessive power flow in a specific microgrid 110 or 120. Through this, the inter-linking converter 130 can contribute to maintaining the stability of the power system.

Additionally, the inter-linking converter 130 may utilize an auto frequency control (AFC) function to respond to a sharp increase in load or sharp decrease in renewable energy output. For example, if the load within a specific microgrid 110 or 120 sharply increases or the output from a solar power facility sharply decreases due to a weather change, the inter-linking converter 130 may detect such changes and compensate for them by receiving the necessary power from the other microgrid 110 or 120 or an external system.

The inter-linking converter 130 may mitigate frequency fluctuation issues that may arise in microgrids with low inertia. In systems with low inertia, frequency can easily vary with changes in load or fluctuations in renewable energy output. The inter-linking converter 130 provides functionality to respond quickly in such environments and stabilize the frequency.

The inter-linking converter 130 may calculate the supply reserve power and demand reserve power of each microgrid 110 and 120. The supply reserve power and the demand reserve power may be calculated based on curtailed renewable energy power, the state of charge (SoC) for batteries and fuel cells, the capacity of a power conditioning system (PCS), and so on. For example, the supply reserve power for each power generating facility may be proportionally calculated by applying a weight to the SoC and the rated capacity of the PCS, or it may be calculated stepwise based on the maximum and minimum values of the SoC. Additionally, the supply reserve power may be calculated using a fuzzy logic, a lookup table, or the like. The demand reserve power may be calculated in a similar manner, and the calculated value may be used for controlling the inter-linking converter 130.

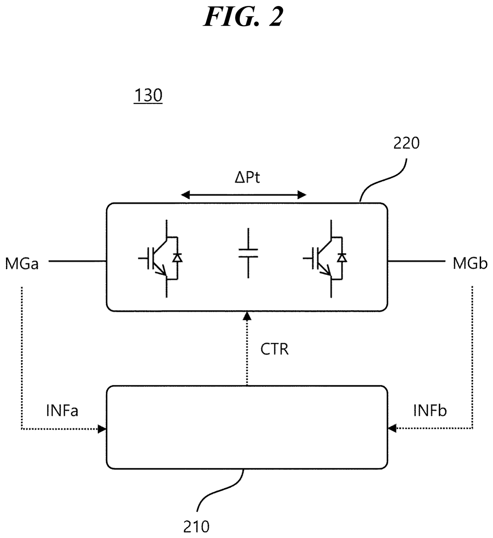

FIG. 2 is a diagram illustrating a configuration of an inter-linking converter according to one embodiment.

Referring to FIG. 2, the inter-linking converter 130 may include a power stage 220 and a controller 210.

The power stage 220, as a component of the inter-linking converter 130, may be configured as a circuit that physically performs power conversion. This component may primarily include power semiconductor switches, passive components (e.g., inductors and capacitors), and transformers. This component may function to convert input power and produce output power adjusted to meet specific requirements.

The power stage 220 may handle the process of converting direct current (DC) or alternating current (AC) power. For example, it may operate in inverter mode to convert DC power to AC or in rectifier mode to convert AC power to DC. Such conversions may be required for power exchange between microgrids 110 and 120 or for connections between the microgrids 110 and 120 and an external power system.

The power stage 220 may use high-speed switching devices to minimize losses and enhance efficiency during the power conversion process. For example, switching components such as insulated gate bipolar transistors (IGBTs) or metal-oxide-semiconductor field-effect transistors (MOSFETs) may be employed, and they may possess characteristics suited for controlling current flow.

The power stage 220 may also include filter circuits to reduce electromagnetic interference (EMI) that may occur during power conversion. These filters can help suppress harmonics and contribute to stabilizing the output power. In this process, inductors and capacitors may play a role in mitigating voltage and current fluctuations.

The operation of the power stage 220 may be controlled based on signals from the controller 210. The controller 210 may transmit signals to adjust switching operations within the power stage 220 in response to input signals, thereby maintaining the output power at a desired level. Through this, the power stage 220 may provide stable operation under various power conditions.

The controller 210 may acquire microgrid status information INFa and INFb that includes the status of distributed resources in a plurality of microgrid MGa and MGb. Based on this information INFa and INFb, the controller 210 may calculate the supply reserve power or demand reserve power of each microgrid MGa and MGb. Then, the controller 210 may transmit a control signal CTR to the power stage 220 based on the calculated supply or demand reserve power of each microgrid MGa and MGb.

The distributed resources included in each microgrid 110 and 120 may include various devices capable of producing electric power, storing it, or regulating demand for it. The distributed resources may include generators, which may include devices capable of producing electricity, such as solar panels, wind turbines, and diesel generators. Such generators may operate as power supply sources within the microgrids 110 and 120, and different types of generators may be selected depending on specific environmental conditions or design objectives.

The distributed resources included in the microgrids 110 and 120 may also include controllable loads. The controllable loads refer to devices capable of regulating power consumption - for example, air conditioning systems, industrial machinery, and household electronics. These loads may receive signals from a control system such as an energy management system (EMS) to change the operating state or to increase or decrease power consumption. This may contribute to balancing power supply and demand at a specific time.

Additionally, the microgrids 110 and 120 may include an energy storage system (ESS). The ESS is a device capable of storing electricity and supplying it when needed, and it may be implemented in various forms such as a lithium-ion battery, a lead-acid battery, and a flow battery. The ESS can be used to compensate for the variability of renewable energy or to adjust a temporal gap between power demand and supply.

In addition, devices such as fuel cells and electrolyzers may be included in the microgrids 110 and 120. A fuel cell is a device capable of producing electricity through a chemical reaction between hydrogen and oxygen, while an electrolyzer is a device capable of producing hydrogen by decomposing water using electricity. These devices may serve as components for implementing a hydrogen-based energy circulation structure in the microgrids 110 and 120.

The distributed resources included in the microgrids 110 and 120 may operate independently or in combination, and their configurations may vary depending on specific operational scenarios or regional characteristics. For example, an energy storage system (ESS) may be used in conjunction with renewable energy, and controllable loads may contribute to reducing load in situations where power demand sharply increases.

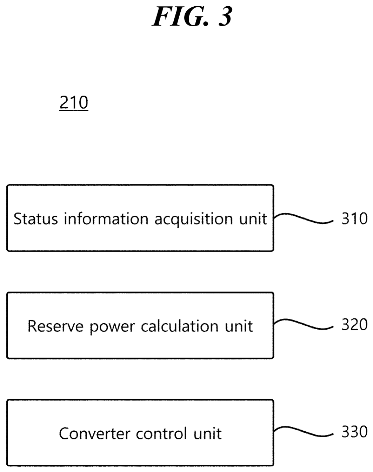

FIG. 3 is a diagram illustrating a configuration of a controller according to one embodiment.

Referring to FIG. 3, the controller 210 may include a status information acquisition unit 310, a reserve power calculation unit 320, and a converter control unit 330.

The status information acquisition unit 310 may acquire microgrid status information that includes the status of distributed resources in each of a plurality of microgrids. The status information may include, for example, SoC, current power generation, fault information, or other types of information.

The reserve power calculation unit 320 may calculate the supply reserve power of each microgrid based on information on the status of each distributed resource.

When the distributed resource is a diesel generator, the reserve power calculation unit 320 may calculate the supply reserve power by subtracting the current power generation from the rated capacity of the diesel generator. When calculating the supply reserve power, the reserve power calculation unit 320 may also take into account operational limits, fuel available time, and so on.

If the distributed resource is curtailed renewable energy power, the reserve power calculation unit 320 may calculate the supply reserve power as the curtailed power of the renewable energy source. For example, if the distributed resource is a photovoltaic generator, and the maximum power that can be produced based on the current solar irradiance is curtailed, the reserve power calculation unit 320 may calculate the supply reserve power of the photovoltaic generator based on the difference between the current output and the maximum power.

The reserve power calculation unit 320 may calculate the supply reserve power of a distributed resource that manages the state of charge (SoC) - for example, a battery, a fuel cell, etc. - based on the difference between a current SoC and a minimum SoC.

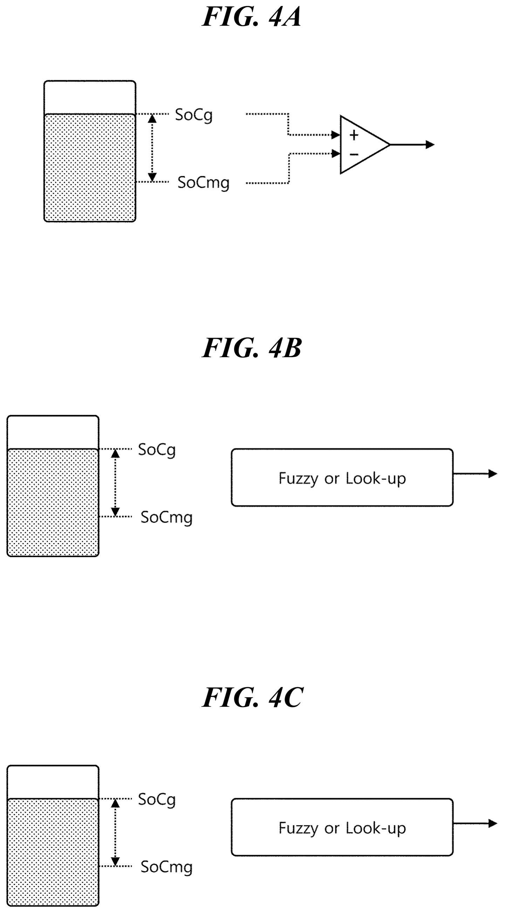

FIGS. 4A to 4C are diagrams illustrating examples in which a reserve power calculation unit calculates supply reserve power based on a current SoC, according to one embodiment.

Referring to FIG. 4A, the reserve power calculation unit may compare the current state of charge (SoCg) with the minimum state of charge (SoCmg), and determine that supply reserve power is available if the current SoC (SoCg) is greater. In this case, the reserve power calculation unit may determine the rated capacity of a power conditioning system (PCS) connected to the resource as the supply reserve power of the resource.

Referring to FIG. 4B, the reserve power calculation unit may check the current state of charge (SoCg) and the minimum state of charge (SoCmg), and calculate the supply reserve power of the resource by multiplying the difference between the current SoC (SoCg) and the minimum SoC (SoCmg) by a certain coefficient (α) and then multiplying the result by the rated capacity of the PCS. Here, the certain coefficient (α) may represent discharge efficiency.

Referring to FIG. 4C, the reserve power calculation unit may check the current state of charge (SoCg) and the minimum state of charge (SoCmg), and calculate the supply reserve power by assigning the values of the current SoC (SoCG) and minimum SoC (SoCmg) into a fuzzy logic or a lookup table. Here, the fuzzy logic may be a logic that is pre-trained on validated data, etc., and the lookup table may be a table that is pre-configured using validated data, etc.

Referring again to FIG. 3, the reserve power calculation unit 320 may calculate the demand reserve power of each microgrid based on information on the status of each distributed resource.

When the distributed resource is HVAC (Heating, Ventilation, and Air Conditioning), the reserve power calculation unit 320 may calculate the demand reserve power based on the difference between the rated capacity of the HVAC and its current usage.

The reserve power calculation unit 320 may calculate the demand reserve power of a resource that manages the state of charge (SoC), based on the difference between the current SoC and the maximum SoC.

Here, 'SoCmg' refers to the minimum SoC that may be used as supply reserve power.

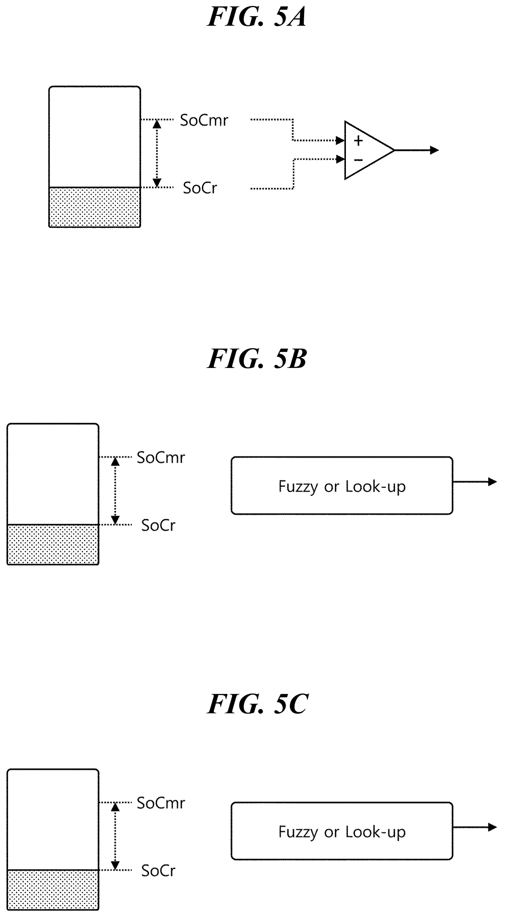

FIGS. 5A to 5C are diagrams illustrating examples in which the reserve power calculation unit calculates demand reserve power based on a current SoC, according to one embodiment.

Referring to FIG. 5A, the reserve power calculation unit may compare the current state of charge (SoCr) with the maximum state of charge (SoCmr), and determine that demand reserve power is available if the current SoC (SoCr) is smaller. In this case, the reserve power calculation unit may determine the rated capacity of a power conditioning system (PCS) connected to the resource as the demand reserve power of the resource.

Referring to FIG. 5B, the reserve power calculation unit may check the current state of charge (SoCr) and the maximum state of charge (SoCmr), and calculate the demand reserve power of the resource by multiplying the difference between the current SoC (SoCr) and the maximum SoC (SoCmr) by a certain coefficient (α) and then multiplying the result by the rated capacity of the PCS. Here, the certain coefficient (α) may represent charging efficiency.

Referring to FIG. 5C, the reserve power calculation unit may check the current state of charge (SoCr) and the maximum state of charge (SoCmr), and calculate the demand reserve power by assigning the values of the current SoC (SoCR) and maximum SoC (SoCmr) into a fuzzy logic or a lookup table. Here, the fuzzy logic may be a logic that is pre-trained on validated data, etc., and the lookup table may be a table that is pre-configured using validated data, etc.

Here, 'SoCmr' refers to the maximum SoC that may be used as demand reserve power.

Referring again to FIG. 3, the reserve power calculation unit 320 may calculate the supply reserve power and/or demand reserve power of each entire microgrid by calculating the supply reserve power and/or demand reserve power for each distributed resource of each microgrid and summing these values.

The reserve power calculation unit 320 may determine a mode based on the supply reserve power or demand reserve power of each microgrid.

A total of four modes may be configured for two microgrids. A first mode may represent a state in which a first microgrid has insufficient supply reserve power, and a second mode may represent a state in which the first microgrid has insufficient demand reserve power. A third mode may represent a state in which a second microgrid has insufficient supply reserve power, and a fourth mode may represent a state in which the second microgrid has insufficient demand reserve power.

The reserve power calculation unit 320 may activate the first mode when the supply reserve power of the first microgrid is less than first minimum supply reserve power. Additionally, the reserve power calculation unit 320 may activate the second mode when the demand reserve power of the first microgrid is less than first minimum demand reserve power. Furthermore, the reserve power calculation unit 320 may activate the third mode when the supply reserve power of the second microgrid is less than second minimum supply reserve power. Furthermore, the reserve power calculation unit 320 may activate the fourth mode when the demand reserve power of the second microgrid is less than second minimum demand reserve power.

The reserve power calculation unit 320 may determine and activate a mode. Two or more modes may be activated simultaneously. For example, the reserve power calculation unit 320 may activate the first mode and the third mode simultaneously, the second mode and the fourth mode simultaneously, the second mode and the third mode simultaneously, or the first mode and the fourth mode simultaneously.

The converter control unit 330 may control the power stage based on the supply reserve power or demand reserve power of each microgrid. In this case, the converter control unit 330 may determine the direction of power transmission and reception between microgrids according to the determined mode.

For example, in the first mode, the converter control unit 330 may control the power stage so that power flows from the second microgrid to the first microgrid, and in the second mode, it may control the power stage so that power flows from the first microgrid to the second microgrid. Additionally, in the third mode, the converter control unit 330 may control the power stage so that power flows from the first microgrid to the second microgrid, and in the fourth mode, it may control the power stage so that power flows from the second microgrid to the first microgrid.

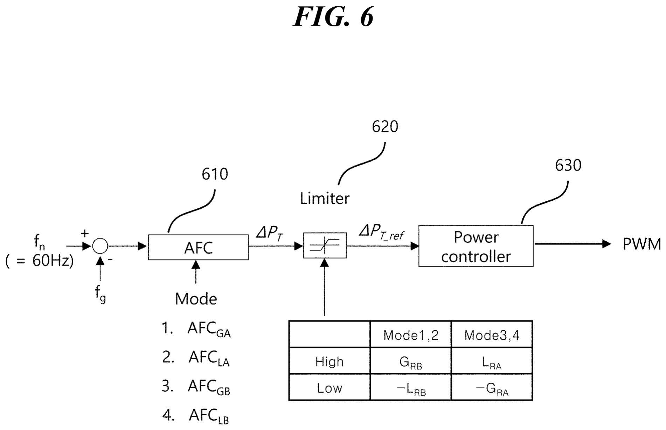

FIG. 6 is a diagram illustrating a first example configuration of a converter control unit according to one embodiment.

Referring to FIG. 6, the converter control unit may include an auto frequency control (AFC) unit 610, a limiter 620, and a power controller 630.

The AFC unit 610 may receive a mode value as input. The mode value may include, for example, the first mode (AFCga) in which the first microgrid has insufficient supply reserve power; the second mode (AFCla) in which the first microgrid has insufficient demand reserve power; the third mode (AFCgb) in which the second microgrid has insufficient supply reserve power; and the fourth mode (AFClb) in which the second microgrid has insufficient demand reserve power.

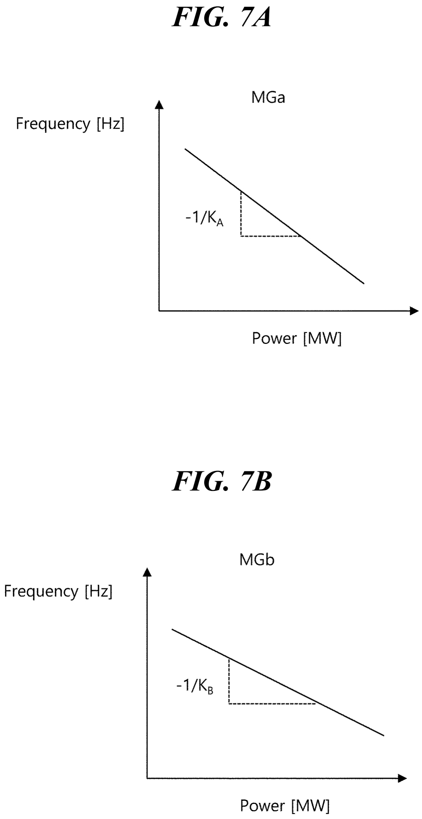

The AFC unit 610 may select a droop curve according to these modes. FIGS. 7A and 7B illustrate examples of droop curves according to one embodiment. The AFC unit 610 may select a first droop curve shown in FIG. 7A for the first mode and the second mode, and may select a second droop curve shown in FIG. 7B for the third mode and the fourth mode.

In addition, the AFC unit 610 may calculate required power (ΔPt) by applying the difference between a measured frequency (fg) and a reference frequency (fn) to a droop curve.

For example, in the first mode, the AFC unit 610 may calculate first required supply power by applying the difference between a measured frequency and a reference frequency of the first microgrid to a droop curve of the first microgrid. In the second mode, the AFC unit 610 may calculate first required demand power by applying the difference between the measured frequency and the reference frequency of the first microgrid to the droop curve of the first microgrid. In the third mode, the AFC unit 610 may calculate second required supply power by applying the difference between a measured frequency and a reference frequency of the second microgrid to a droop curve of the second microgrid. In the fourth mode, the AFC unit 610 may calculate second required demand power by applying the difference between the measured frequency and the reference frequency of the second microgrid to the droop curve of the second microgrid.

An upper or lower limit may be set on the values calculated by the AFC unit 610 by the limiter 620. Here, the upper or lower limit may be determined as the supply reserve power or demand reserve power of a microgrid that provides reserve power.

For example, in the first mode, the upper limit of the limiter 620 may be determined as the supply reserve power (Grb) of the second microgrid. The converter control unit may apply the first required supply power calculated by the AFC unit 610 to the limiter whose upper limit is determined as the supply reserve power (Grb) of the second microgrid, thereby calculating a supply power command value (ΔPt_ref) from the second microgrid to the first microgrid.

In the second mode, the lower limit of the limiter 620 may be determined as the demand reserve power (-Lrb) of the second microgrid. The converter control unit may apply the first required demand power calculated by the AFC unit 610 to the limiter whose lower limit is determined as the demand reserve power (-Lrb) of the second microgrid, thereby calculating the supply power command value (ΔPt_ref) from the second microgrid to the first microgrid.

Here, the upper and lower limits may be reversed depending on the direction in which power is set to flow. In the description of this embodiment, it is assumed that power flows in a positive direction when it flows from the second microgrid to the first microgrid. In the opposite case, the aforementioned upper and lower limits may be reversed.

In the third mode, the lower limit of the limiter 620 may be determined as the supply reserve power (-Gra) of the first microgrid. The converter control unit may apply the second required supply power calculated by the AFC unit 610 to the limiter whose lower limit is determined as the supply reserve power (-Gra) of the first microgrid, thereby calculating a supply power command value (ΔPt_ref) from the first microgrid to the second microgrid.

In the fourth mode, the upper limit of the limiter 620 may be determined as the demand reserve power (Lra) of the first microgrid. The converter control unit may apply the second required demand power calculated by the AFC unit 610 to the limiter whose upper limit is determined as the demand reserve power (Lra) of the first microgrid, thereby calculating the supply power command value (ΔPt_ref) from the first microgrid to the second microgrid.

The power controller 630 may generate a PWM signal based on the supply power command value (ΔPt_ref) to control the power stage.

Meanwhile, when two or more modes are activated simultaneously, a supply command value may be calculated by summing the values calculated in each mode.

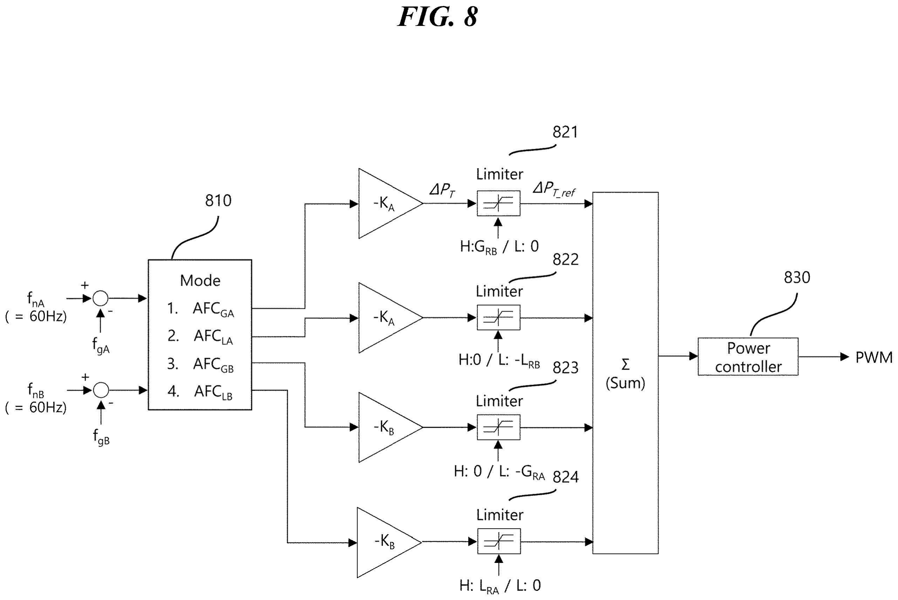

FIG. 8 is a diagram illustrating a second example configuration of the converter control unit according to one embodiment.

Referring to FIG. 8, in the first mode, the AFC unit 810 may calculate the first required supply power by applying the difference between a measured frequency (fga) and a reference frequency (fna) of the first microgrid to a droop curve (-K_{A}) of the first microgrid, and may then apply the first required supply power to a first limiter 821 whose upper limit is the supply reserve power (Grb) of the second microgrid and whose lower limit is zero, thereby calculating a first supply power command value.

In the second mode, the AFC unit 810 may calculate the first required demand power by applying the difference between the measured frequency (fga) and the reference frequency (fna) of the first microgrid to the droop curve (-K_{A}) of the first microgrid, and may then apply the first required demand power to a second limiter 822 whose upper limit is zero and whose lower limit is the demand reserve power (-Lrb) of the second microgrid, thereby calculating a second supply power command value.

In the third mode, the AFC unit 810 may calculate the second required supply power by applying the difference between a measured frequency (fgb) and a reference frequency (fnb) of the second microgrid to a droop curve (-K_{B}) of the second microgrid, and may then apply the second required supply power to a third limiter 823 whose upper limit is zero and whose lower limit is the supply reserve power (-Gra) of the first microgrid, thereby calculating a third supply power command value.

In the fourth mode, the AFC unit 810 may calculate the second required demand power by applying the difference between the measured frequency (fgb) and the reference frequency (fnb) of the second microgrid to the droop curve (-K_{B}) of the second microgrid, and may then apply the second required demand power to a fourth limiter 824 whose upper limit is the demand reserve power (Lra) of the first microgrid and whose lower limit is zero, thereby calculating a fourth supply power command value.

The first to fourth supply power command values are summed and transmitted to the power controller 830, and the power controller 830 may control the power stage based on the summed supply power command value.

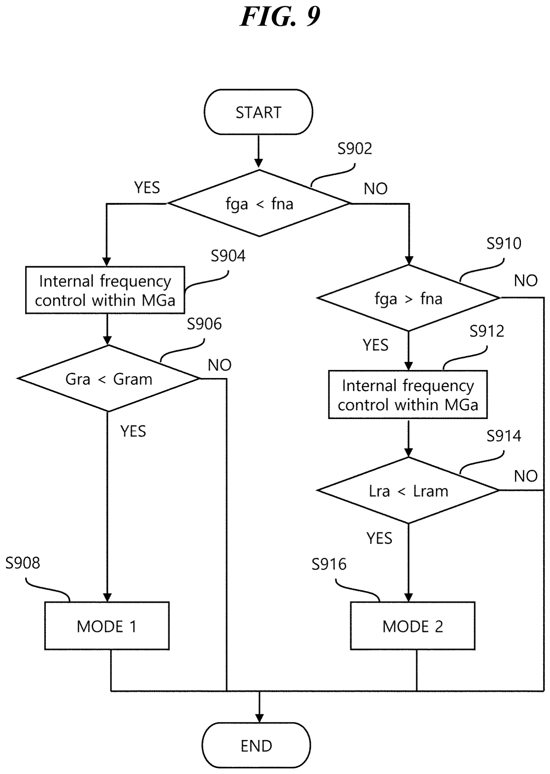

FIG. 9 is a flowchart illustrating a method in which the inter-linking converter controls a first microgrid according to one embodiment.

The controller may acquire microgrid status information including the status of distributed resources in each of a plurality of microgrids connected to the inter-linking converter (not shown).

Referring to FIG. 9, the controller may compare a measured frequency of the first microgrid with a reference frequency thereof (S902).

If the measured frequency is lower than the reference frequency (YES in S902), the controller may control the frequency of the first microgrid using the distributed resources within the first microgrid (S904).

Then, the controller may compare the supply reserve power of the first microgrid with minimum supply reserve power, and if the supply reserve power is insufficient (YES in S906), it may activate the first mode (S908).

The controller may then perform an operation according to the aforementioned first mode.

If the measured frequency is higher than the reference frequency (YES in S910), the controller may control the frequency of the first microgrid using the distributed resources within the first microgrid (S912).

Then, the controller may compare the demand reserve power of the first microgrid with minimum demand reserve power, and if the demand reserve power is insufficient (YES in S914), it may activate the second mode (S916).

The controller may then perform an operation according to the aforementioned second mode.

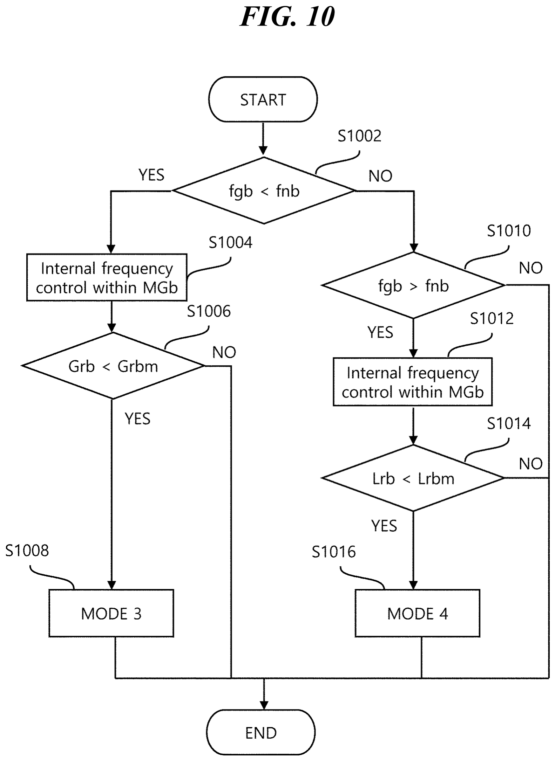

FIG. 10 is a flowchart illustrating a method in which the inter-linking converter controls a second microgrid according to one embodiment.

The controller may acquire microgrid status information including the status of distributed resources in each of a plurality of microgrids connected to the inter-linking converter (not shown).

Referring to FIG. 10, the controller may compare a measured frequency of the second microgrid with a reference frequency thereof (S1002).

If the measured frequency is lower than the reference frequency (YES in S1002), the controller may control the frequency of the second microgrid using the distributed resources within the second microgrid (S1004).

Then, the controller may compare the supply reserve power of the second microgrid with minimum supply reserve power, and if the supply reserve power is insufficient (YES in S1006), it may activate the third mode (S1008).

The controller may then perform an operation according to the aforementioned third mode.

If the measured frequency is higher than the reference frequency (YES in S1010), the controller may control the frequency of the second microgrid using the distributed resources within the second microgrid (S1012).

Then, the controller may compare the demand reserve power of the second microgrid with minimum demand reserve power, and if the demand reserve power is insufficient (YES in S1014), it may activate the fourth mode (S1016).

The controller may then perform an operation according to the aforementioned fourth mode.

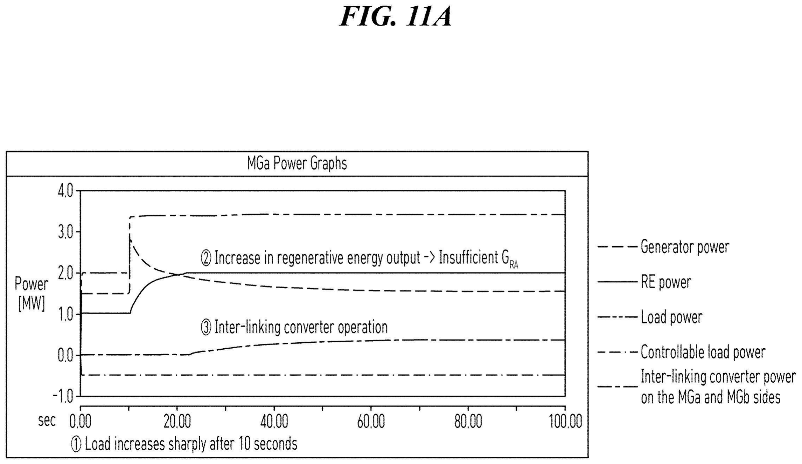

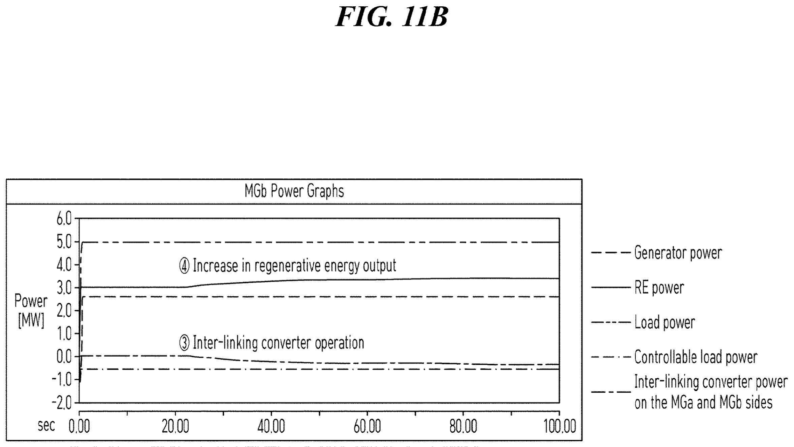

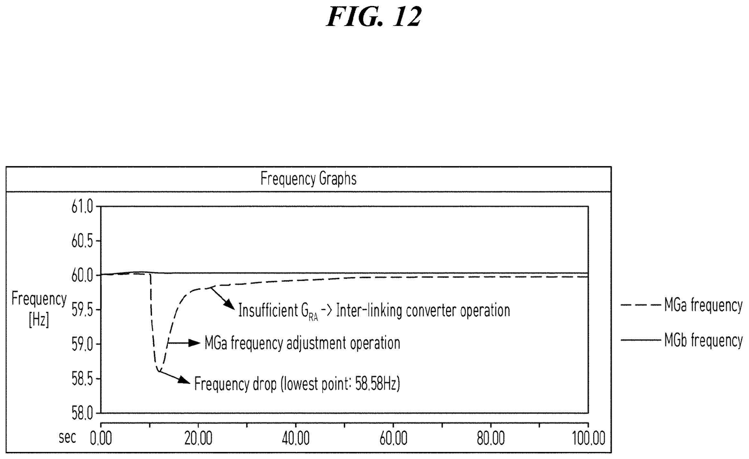

FIGS. 11A, 11B, and 12 illustrate experimental waveforms of a first mode according to one embodiment.

Referring to FIGS. 11A, 11B, and 12, when a sharp rise in load occurs in the first microgrid, the frequency of the first microgrid decreases. At this time, internal control within the first microgrid is activated to suppress the frequency drop. However, if the frequency cannot be restored to 60 Hz due to insufficient supply reserve power, the inter-linking converter supplies power from the second microgrid to the first microgrid. The transmitted power is limited to a supply reserve power range of the second microgrid. Through this control, controllable loads in the first and second microgrids are maintained, and renewable energy generation increases, enabling more economical operation.

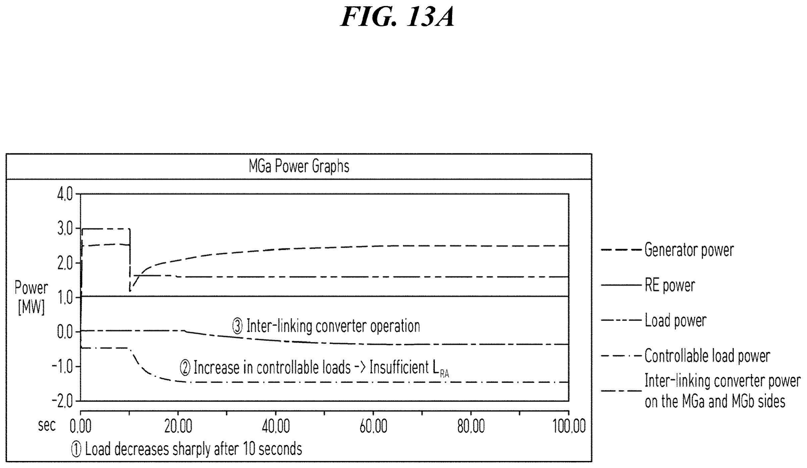

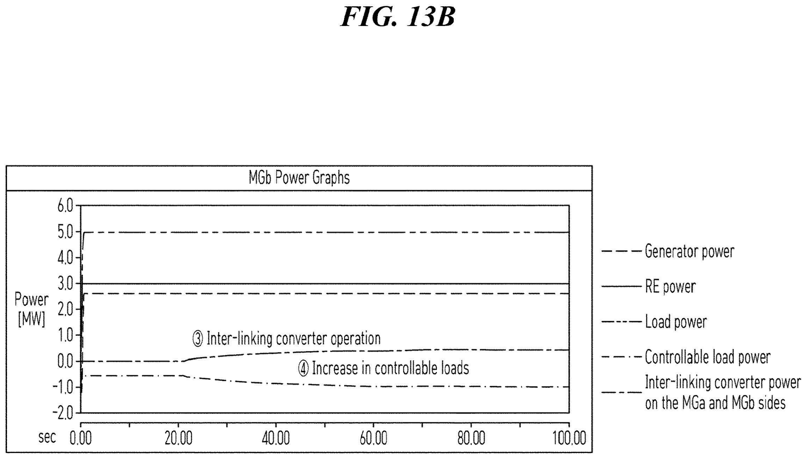

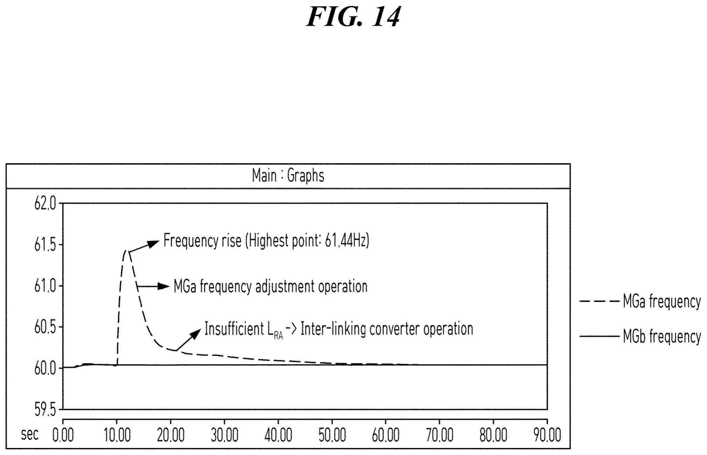

FIGS. 13A, 13B, and 14 illustrate experimental waveforms of a second mode according to one embodiment.

Referring to FIGS. 13A, 13B, and 14, when a sharp drop in load occurs in the first microgrid, the frequency of the first microgrid increases. At this time, internal control within the first microgrid is activated to suppress the frequency drop. However, if the frequency cannot be restored to 60 Hz due to insufficient demand reserve power, the inter-linking converter supplies power from the first microgrid to the second microgrid. The transmitted power is limited to a demand reserve power range of the second microgrid. Through this control, controllable loads in both the first and second microgrids are maintained, and renewable energy generation increases, enabling more economical operation.

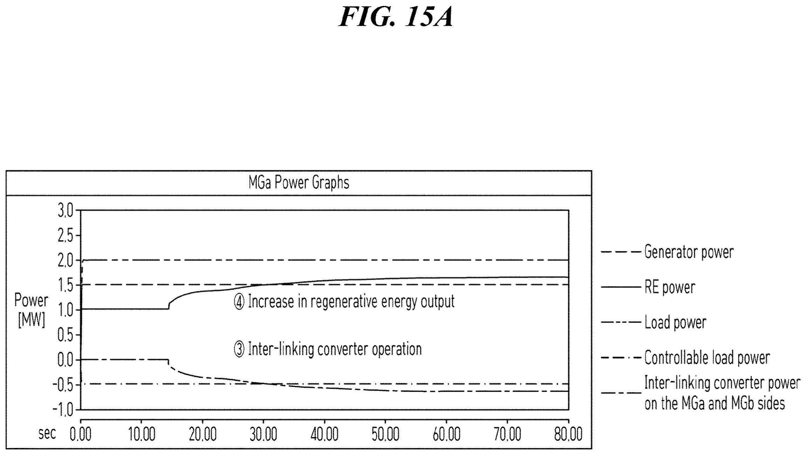

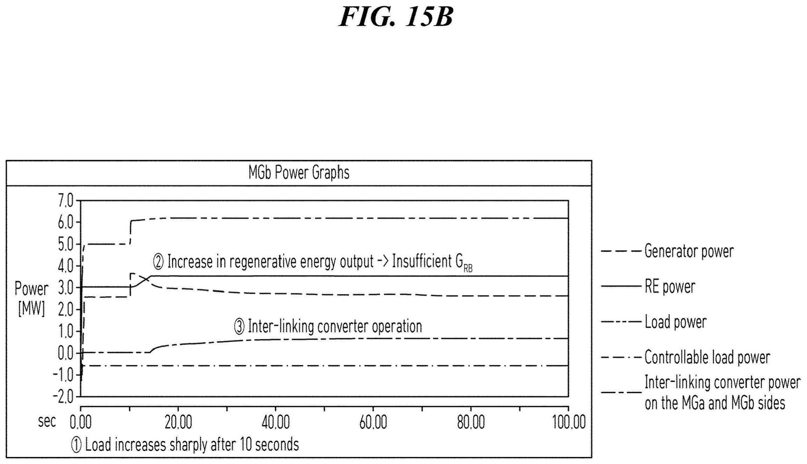

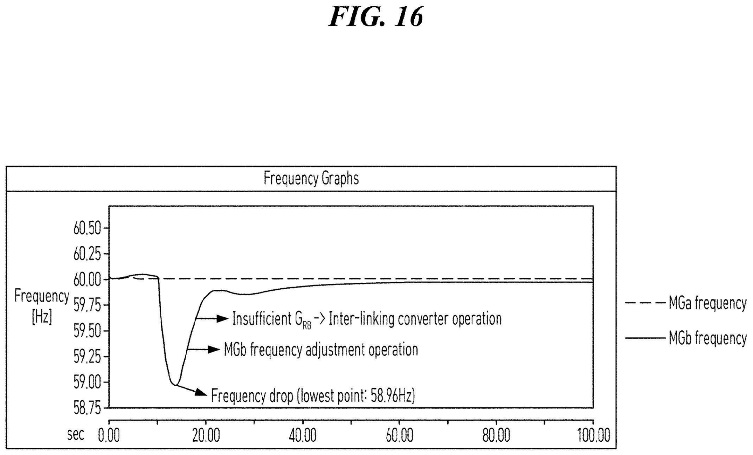

FIGS. 15A, 15B, and 16 illustrate experimental waveforms of a third mode according to one embodiment.

Referring to FIGS. 15A, 15B, and 16, when a sharp rise in load occurs in the second microgrid, the frequency of the second microgrid decreases. At this time, internal control within the second microgrid is activated to suppress the frequency drop. However, if the frequency cannot be restored to 60 Hz due to insufficient supply reserve power, the inter-linking converter supplies power from the first microgrid to the second microgrid. The transmitted power is limited to a supply reserve power range of the first microgrid. Through this control, controllable loads in the first and second microgrids are maintained, and renewable energy generation increases, enabling more economical operation.

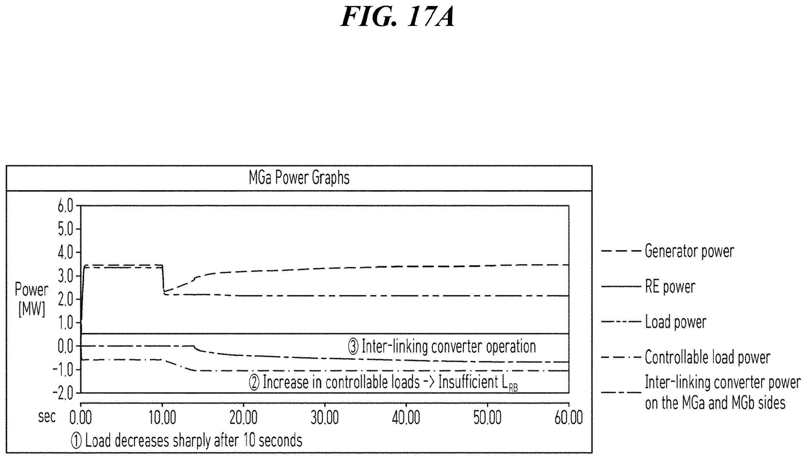

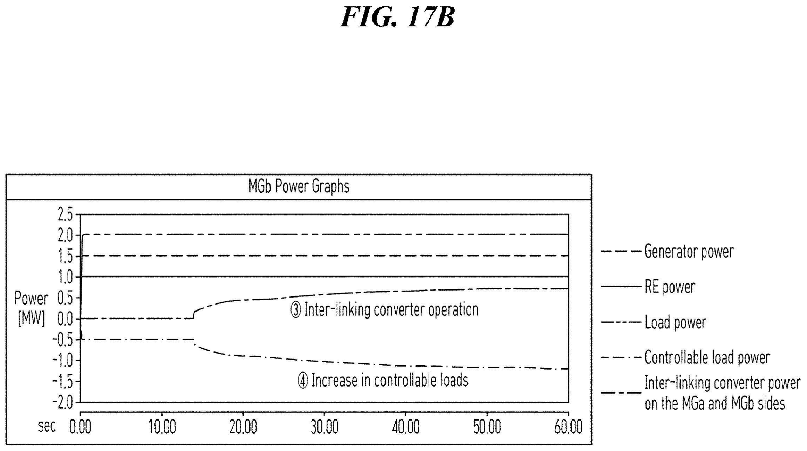

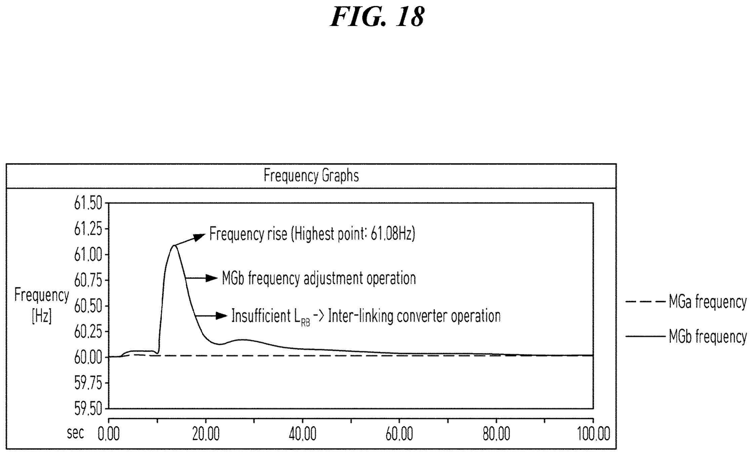

FIGS. 17A, 17B, and 18 illustrate experimental waveforms of a fourth mode according to one embodiment.

Referring to FIGS. 17A, 17B, and 18, when a sharp drop in load occurs in the second microgrid, the frequency of the second microgrid increases. At this time, internal control within the second microgrid is activated to suppress the frequency drop. However, if the frequency cannot be restored to 60 Hz due to insufficient demand reserve power, the inter-linking converter supplies power from the second microgrid to the first microgrid. The transmitted power is limited to a demand reserve power range of the first microgrid. Through this control, controllable loads in the first and second microgrids are maintained, and renewable energy generation increases, enabling more economical operation.

As described above, according to the present disclosure, it is possible to enhance the energy self-sufficiency of distributed power systems, minimize energy waste, and maximize operational efficiency. Furthermore, the present disclosure enables effective control of the variability of renewable energy resources and maintains a stable power supply to loads associated with each microgrid.

As used herein, terms such as "include", "comprise," or "have" are to be interpreted as indicating the possibility of inclusion, unless explicitly stated otherwise, and therefore should not be construed as excluding other components but rather as allowing the inclusion of additional components. All terms, including technical and scientific terms, are to be interpreted as having the meanings commonly understood by those of ordinary skill in the art to which the present disclosure pertains, unless otherwise defined. Commonly used terms, such as those defined in dictionaries, should be interpreted in accordance with their contextual meaning in the relevant technical field, and unless expressly defined in the present disclosure, should not be interpreted in an idealized or overly formal sense.

The foregoing description is merely illustrative of the technical concept of the present disclosure, and those skilled in the art to which the disclosure pertains will understand that various modifications and alterations may be made without departing from the essential characteristics of the disclosure. Accordingly, the embodiments disclosed herein are intended to explain, not to limit, the technical concept of the disclosure, and the scope of the technical concept should not be construed as being restricted by these embodiments. The scope of protection of the present disclosure shall be interpreted based on the claims below, and all technical concepts falling within an equivalent scope shall be construed as being included within the scope of rights of the present disclosure.

## Claims

1. An inter-linking converter 130 comprising:
a status information acquisition unit 310 which acquires microgrid status information including the status of distributed resources in each of a plurality of microgrids 110 and 120;
a reserve power calculation unit 320 which calculates the supply reserve power or demand reserve power of each microgrid 110 and 120 based on information on the status of the distributed resources; and
a converter control unit 330 which controls a power stage 220 of the inter-linking converter 130 based on the calculated supply reserve power or demand reserve power of each microgrid 110 and 120, so that power is transmitted and received between the microgrids 110 and 120.

2. The inter-linking converter of claim 1, wherein the reserve power calculation unit 320 determines a mode based on the supply reserve power or demand reserve power of each microgrid 110 and 120, and the converter control unit 330 determines the direction of power transmission and reception between the microgrids 110 and 120 according to the determined mode.

3. The inter-linking converter of claim 2, wherein the converter control unit 330 limits the transmission power between the microgrids 110 and 120 based on the supply reserve power or the demand reserve power.

4. The inter-linking converter of claim 2, wherein the reserve power calculation unit 320 activates a first mode when the supply reserve power of a first microgrid is less than first minimum supply reserve power, and, in the first mode, the converter control unit 330 calculates first required supply power by applying the difference between a measured frequency and a reference frequency of the first microgrid to a droop curve of the first microgrid.

5. The inter-linking converter of claim 4, wherein the converter control unit 330 applies the calculated first required supply power to a first limiter 821 whose upper limit is determined as the supply reserve power of a second microgrid, thereby calculating a first supply power command value from the second microgrid to the first microgrid.

6. The inter-linking converter of claim 2, wherein the reserve power calculation unit 320 activates a second mode when the demand reserve power of the first microgrid is less than first minimum demand reserve power, and, in the second mode, the converter control unit 330 calculates first required demand power by applying the difference between a measured frequency and a reference frequency of the first microgrid to a droop curve of the first microgrid.

7. The inter-linking converter of claim 6, wherein the converter control unit 330 applies the calculated first required demand power to a second limiter 822 whose lower limit is determined as the demand reserve power of the second microgrid, thereby calculating a second supply power command value from the first microgrid to the second microgrid.

8. The inter-linking converter of claim 6, wherein the reserve power calculation unit 320 activates a third mode when the supply reserve power of the second microgrid is less than second minimum supply reserve power, and, in the third mode, the converter control unit 330 calculates second required supply power by applying the difference between a measured frequency and a reference frequency of the second microgrid to a droop curve of the second microgrid, and, when both the second mode and the third mode are activated, applies both the first required demand power and the second required supply power to calculate a supply power command value between the first microgrid and the second microgrid.

9. The inter-linking converter of claim 1, wherein the reserve power calculation unit 320 calculates the supply reserve power of a distributed resource that manages the state of charge (SoC), based on the difference between a current SoC and a minimum SoC.

10. The inter-linking converter of claim 9, wherein the reserve power calculation unit 320 determines that the distributed resource has supply reserve power when the current SoC is greater than the minimum SoC, and determines the rated capacity of a power conditioning system (PCS) associated with the resource as the supply reserve power of the resource.

11. The inter-linking converter of claim 9, wherein the reserve power calculation unit 320 calculates the supply reserve power of the resource by multiplying the difference between the current SoC and the minimum SoC by a certain coefficient and multiplying the result by the rated capacity of a power conditioning system (PCS) associated with the resource.

12. The inter-linking converter of claim 1, wherein the reserve power calculation unit 320 calculates the demand reserve power of a distributed resource that manages the state of charge (SoC), based on the difference between the current SoC and the maximum SoC.

13. The inter-linking converter of claim 1, wherein the reserve power calculation unit 320 calculates the supply reserve power of a renewable energy resource, among the distributed resources, as curtailed power.

14. A control method of an inter-linking converter 130, comprising:
acquiring microgrid status information including the status of distributed resources in each of a plurality of microgrids 110 and 120;
comparing a measured frequency of one microgrid with a reference frequency thereof;
controlling the frequency of the one microgrid using the distributed resources within the one microgrid if the measured frequency is lower than the reference frequency; and
controlling a power stage 220 of the inter-linking converter 130 to supply power from another microgrid to the one microgrid if the supply reserve power of the one microgrid is insufficient.

15. The control method of claim 14, further comprising:
controlling the frequency of the one microgrid using the distributed energy resources within the microgrid if the measured frequency is higher than the reference frequency; and
controlling the power stage 220 of the inter-linking converter 130 to supply power from the one microgrid to another microgrid if the demand reserve power of the one microgrid is insufficient.
